(19) Europäisches Patentamt
European Patent Office
Office européen des brevets

(11) **EP 3 021 103 A1**

(12) **EUROPEAN PATENT APPLICATION**

(43) Date of publication:
**18.05.2016 Bulletin 2016/20**

(51) Int Cl.:
**G01N 15/08** (2006.01)

(21) Application number: **14192949.7**

(22) Date of filing: **13.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Mir Arastirma ve Gelistirme A.S.**
**34220 Istanbul (TR)**

(72) Inventors:
• **Gemici, Zafer**
  **34220 Istanbul (TR)**

• **Deveci, Süleyman**
  **34220 Istanbul (TR)**
• **Birtane, Tamer**
  **34220 Istanbul (TR)**
• **Öksüz, Yalcin**
  **34220 Istanbul (TR)**
• **Teke, Ismail**
  **34220 Istanbul (TR)**

(74) Representative: **Sevinç, Erkan**
**Istanbul Patent A.S.**
**Plaza-33, Büyükdere Cad. No: 33/16**
**Sisli**
**34381 Istanbul (TR)**

(54) **System and method for gas diffusion coefficient measurement of three-dimensional hollow bodies having one opening**

(57)     A non gas specific system (1) for use in constant volume/variable pressure gas diffusion coefficient measurement of a three dimensional hollow body (2) having one opening (15), said system comprises a sealable chamber (3) having an inlet line (4), a first outlet line (5) and a second outlet line (6) when sealed, wherein the inlet line (4) comprises an inlet valve (7) for regulated gas inlet into the chamber, the first outlet line (5) comprises a first pressure sensor (8) and a subsequent first outlet valve (9) for, in use, sucking gas out of said body (2) using a vacuum device (10) interacting with a vacuum sensor, the second outlet line (6) comprises a second outlet valve (11) for, in use, sucking gas out of the chamber (3) using a vacuum device (10), the chamber (3) is in material connection with a second pressure sensor (12), the system further comprises a data recording system (13) for, in use, recording the pressures at the first and second pressure sensors; and, in use, the chamber receives said body, and said first outlet line is in hermetical connection (14) with the opening (15) of said body. The present invention further proposes a method for performing said measurement.

Fig. 1

**Description**

**Technical Field of the Invention**

The present invention relates to a non-gas-specific system for use in constant volume/variable pressure gas permeability measurement of a three-dimensional hollow body having one opening, and a relevant measurement method.

**Background of the Invention**

Diffusion coefficient is one of the important parameters in many applications where polymeric materials are used, such as membrane separation processes, food/beverage packaging, protective coating and casing, and gas transfer in plastic pipes. Therefore, revelation of transfer behavior of gas molecules through polymeric matrices has been an attractive research interest for especially pipe and container producers.

Several commercialized systems and methods are widely used by measuring the gas permeation/diffusivity/diffusion coefficient through polymers. Yet, said systems and methods generally measure the gas transmission rate, permeation or diffusion coefficients through thin films and in accordance with Cartesian coordinate system. One of the methods is the permeation test using a 'sweep gas'. In this method, a planar polymeric matrix (film, membrane or plate) is positioned into a metallic cell such that the volume of the cell is divided by the film into a first and a second volume. One side of the film is swept by a test gas (the gas, permeability of which is to be measured), and an inert gas sweeps (i.e. flows on a surface of) the other side of the film, both in constant flow rates and usually having same pressure values around the both sides of the film. The test gas is first adsorbed by the film, and diffuses towards the second volume; thus it mixes into and flows along with the inert gas towards a gas specific sensor which measures the amount of the test gas in said mixture. The amount of the test gas versus time is recorded and evaluated for determination of the diffusivity/diffusion coefficient of the test gas through said planar polymeric matrix. Conductivity detector, coulometric detector, infrared spectrometer, electrochemical detector, gas chromatograph or mass spectrometer can be used for this measurement. In US 5 159 829, a coulometric sensor is used for measurement of oxygen transmission rate through a polymer matrix. ASTM D 3985-05 describes a method for measuring gas transmission rate using coulometric sensors.

This method requires a sensor selected from abovementioned list, which should be precisely adjusted for measurement of a target gas to be measured. But when measurement of another gas is needed, the sensor must be changed or re-adjusted for said second gas. In case where the sensor is changed, several other relevant data collection equipment might be needed to be changed as well. Thus, this method and setup (system) for performing the method can be considered as gas-specific, with a high setup cost and said cost maximizes in case of change in target gas, permeation behavior of which is to be measured.

Another commercialized method for measurement of gas permeability through planar polymeric matrices is the 'constant pressure / variable volume' method (CPVV). Like the method described above, in this method, a planar polymeric matrix is placed inside a chamber such that the chamber is divided into two separate volumes. A test gas is filled into the first volume with a pressure higher than 1 atm. The second volume is in connection with an S-shaped transparent conduit having a distal end open to the atmosphere and facing towards the opposite direction with regard to the gravity force (i.e. upwards), wherein said conduit is partly filled with mercury. Test gas transferring through the polymer matrix into the second volume displaces the mercury against the gravity, and said displacement is recorded versus time as an indicator of diffusion. This method is detailedly explained in ASTM D 1432. Yet, any changes in humidity around the system, and the amount of water within the polymer matrix subjected to measurement affects the results, and therefore the persistence of the results can be considered as rather unreliable. Additionally, back diffusion and back permeation of air can affect the measurement results, since an end of said conduit is open to the atmosphere.

Constant volume / variable pressure (CVVP) method, a.k.a. time-lag method is another commercialized way for measurement the permeability of gases through polymer matrices. In this method, a planar polymeric matrix, mass transport behavior of which is measured, is placed into a cell such that the cell is divided into separate first and second volumes. Both of the volumes are subjected to reduced pressure; afterwards, a test gas with a constant pressure is applied into the first volume, followed by diffusion thereof through the polymer matrix towards the second volume. The pressure values inside the second volume are recorded against time, and evaluated to understand the mass transfer behavior of the matrix. Since the pressure values are used instead of substance concentrations, this method can be considered as a non-gas-specific method.

For convenience, the above-mentioned systems and methods are used for polymer matrices having planar geometries; and Fick's law's mathematical model solved for Cartesian coordinates is used for evaluating the mass transfer properties thereof.

Cylindrical coordinates are taken into account in determination of gas diffusion coefficients and diffusion behaviors of hollow fiber membranes. A bundle of hollow fiber membranes having two opposite ends open, is sealed from one end using a gas-impermeable material e.g. epoxy resin. The other end of the bundle is brought into material connection with a test gas outlet, and the outlet is connected to a test chamber which receives the bundle completely. A test gas which is kept in constant pressure is supplied into the chamber from a gas inlet and leaves the chamber via a gas outlet. The test gas diffuses through the pores on the side walls of the hollow fibers, and flow towards the test gas outlet, to be measured by a gas chromatograph, a gas analyzer or a soap bubble meter. Some researchers also performed measurements according to the pressure values at the test gas outlet as in time-lag systems, but the relevant time-lag values were not taken into consideration. Additionally, the relevant gas permeability calculations were made according to Cartesian coordinates which is not suitable for non-planar matrices such as mainly cylindrical hollow fiber membranes. It is found that employing Cartesian mathematics for time lag value calculations at non-planar (here, cylindrical) bodies results in errors up to 27% (doi: 10.1016/j.memsci.2006.07.017), and even up to 47% (doi: 10.1016/j.memsci.2005.07.037).

A system and method for use in precise determination of gas permeability behavior of non-planar polymeric matrices is required; especially, for three dimensional hollow bodies having one opening, and wall thickness/diameter ratios thereof are higher than 0.01.

**Objects of the Invention**

Primary object of the present invention is to overcome the abovementioned shortcomings of the prior art.

Another object of the present invention is to provide a non-gas-specific system for gas permeability measurement of a three dimensional hollow body having one opening.

Further an object of the present invention is to provide a non-gas-specific method for measuring the gas permeability of a three dimensional hollow body having one opening.

**Summary of the Invention**

A non-gas-specific system for use in constant volume/variable pressure gas diffusion coefficient measurement of a three-dimensional hollow body having one opening, said system comprises a sealable chamber having an inlet line, a first outlet line and a second outlet line when sealed, wherein the inlet line comprises an inlet valve for regulated gas inlet into the chamber, the first outlet line comprises a first pressure sensor and a subsequent first outlet valve for, in use, sucking gas out of said body using a vacuum device in interaction with a vacuum sensor, the second outlet line comprises a second outlet valve for, in use, sucking gas out of the chamber using a vacuum device; the chamber is in material connection with a second pressure sensor; the system further comprises a data recording system for, in use, recording the pressures at the first and second pressure sensors; and in use, the chamber receives said body, and said first outlet line is in hermetical connection with the opening of said body. The present invention further proposes a method for performing said measurement. Said method comprises the following sequence:

a) inserting said body into a sealable chamber having an inlet line comprising an inlet valve, a first outlet line comprising a first pressure sensor and a subsequent first outlet valve, and a second outlet line comprising a second outlet valve; hermetically connecting the opening of said body with the first outlet line; inner volume of the chamber is in material connection with a second pressure sensor when sealed,

b) sealing the chamber such that any mass transfer into/out of said chamber except through said inlet line, first outlet line and second outlet line is prevented,

c) putting the chamber into thermal connection with a thermal reservoir, thus regulating the temperature of the chamber,

d) sucking out the gas content inside the body and the chamber, through said first outlet line and second outlet line, respectively, having said inlet valve closed, and said first and second outlet valves open, and repeating this step until pressure increase inside the body due to outgassing from the body material reaches a negligible or a known level,

e) feeding gas into the chamber through said inlet line in a regulated manner, while the first and second valves are closed,

f) measuring the pressures at the first pressure sensor and the second pressure sensor, recording the pressure increase in the body and subtracting the pressure increase due to the outgassing phenomena, if any and not at a negligible level,

g) calculating the diffusion coefficient according to the Fick's law for radial diffusion in cylindrical coordinates.

**Brief Description of the Figures**

The figures whose brief explanations are herewith provided are solely intended for providing a better understanding of the present invention and are as such not intended to define the scope of protection or the context in which said scope is to be interpreted in the absence of the description.

Figure 1 is the schematic view of an embodiment of the system according to the present invention.

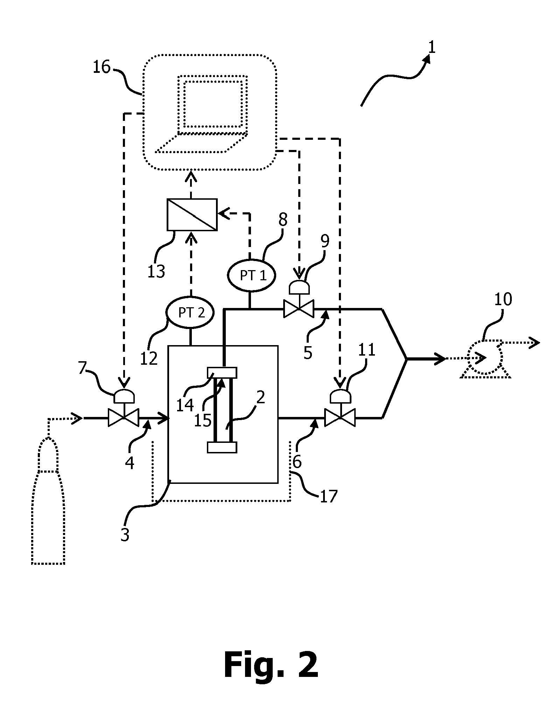

Figure 2 is the schematic view of another embodiment of the system according to the present invention.

**Detailed Description of the Invention**

Referring now to the figures outlined above, the present invention proposes a non-gas-specific system for use in constant volume/variable pressure gas permeability measurement of a three-dimensional hollow body having one opening. The present invention further proposes a method for performing said measurement.

Said system (1) is a non-gas-specific system for use in constant volume/variable pressure gas diffusion coefficient measurement of a three-dimensional hollow body (2) having one opening (15). Said body (2) can originally comprise a plurality of openings, wherein each of said openings except one of them is hermetically sealed, thus said one opening (15) remaining unsealed is for use in said measurement. The system comprises a sealable chamber (3) having an inlet line (4), a first outlet line (5) and a second outlet line (6) when sealed, wherein;

- the inlet line (4) comprises an inlet valve (7) for regulated gas inlet into the chamber (3),
- the first outlet line (5) comprises a first pressure sensor (8) for, in use, measuring the pressure inside the chamber (3), and a subsequent first outlet valve (9) for, in use, sucking gas out of said body (2) using a vacuum device (10) in interaction with a vacuum sensor,
- the second outlet line (5) comprises a second outlet valve (11) for, in use, sucking gas out of the chamber (3) using a vacuum device (10),
- the chamber (3) is in material connection with a second pressure sensor (12) for, in use, measuring the pressure inside the hollow body (2),
- the system further comprises a data recording system (13) for, in use, recording the pressures at the first and second pressure sensors and in use, the chamber receives said body, and said first outlet line is in hermetical connection (14) with the opening (15) of said body.

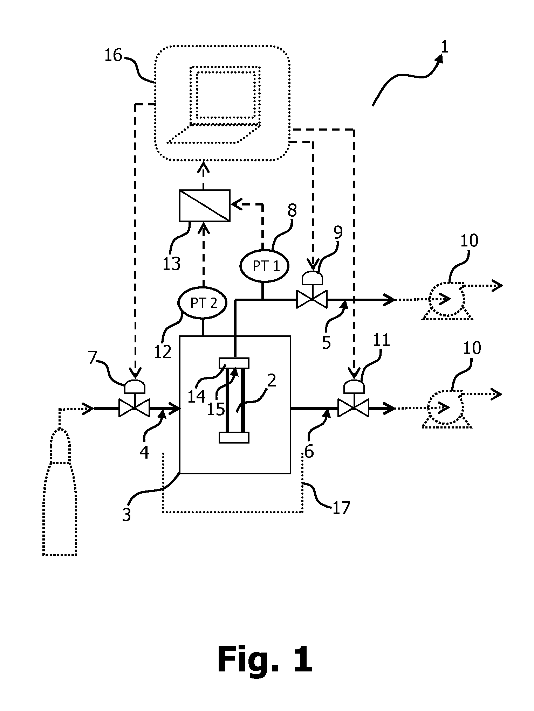

A schematic drawing of an embodiment of the system according to the present invention is shown in Fig. 1(a).

In a preferred embodiment according to the present invention, the distal ends of first and second outlet lines with regard to the chamber are merged after the respective first and second outlet valves, such that said gas suction through said first and second outlet lines can be applied using a single vacuum device. A schematic drawing according to this embodiment is shown in Fig. 1(b).

In another preferred embodiment according to the present invention, the system further comprises a thermal reservoir (17) for, in use, regulating the temperature of said chamber. Said thermal reservoir enables performing the measurement under constant temperature if the facility where the chamber may subject to variable temperature which may affect the precision in the measurement. Said reservoir can be a temperature-controlled water bath.

In another embodiment according to the present invention, said second pressure sensor is located on the second outlet line, between the chamber and the second outlet valve. This facilitates installation of the second pressure sensor, since the second outlet line can be presumed to be a pipe or hose. For same reason, in a further embodiment according to the present invention, said second pressure sensor is located on the inlet line, between the chamber and the inlet valve; since the inlet line can likewise be presumed to be a pipe, pressure sensor installation on which is convenient.

In another embodiment according to the present invention, said second pressure sensor is located on the chamber. This embodiment is especially useful in case of pipes or hoses with high L/D ratios are chosen as said inlet line or second outlet line. Since, it is known for a person skilled in the art having basic knowledge on fluids mechanics that high L/D ratios on flow lines may result in considerable pressure drops which may negatively affect the precision of the measurement.

In another preferred embodiment according to the present invention, said body is a pipe having one opening gas impermeably sealed. Thus, this system is very suitable for use in measurement of gas permeability through side walls of a pipe, when the opening at one end of the pipe is sealed with a gas impermeable material.

In a further embodiment according to the present invention, said body is a fluid container for food and/or beverages; since the system of the present invention can be considered suitable for measurement of gas permeability of the walls of jars, bottles etc. as well, especially if said food and/or beverage container is mainly longitudinal wherein the opening is in one longitudinal edge of the container.

In a preferred embodiment according to the present invention, said system is provided with a computer (16) for receiving and evaluating pressure data from the data recording system (13), and/or for controlling the valves (7, 9, 11). Said data recording system (13) can be a data acquisition equipment (DAQ).

In this invention, a method is also proposed for measuring the gas permeability of a three-dimensional (3D) hollow body having only one opening permitting convective mass transfer therethrough, (e.g. a bottle); or said body can originally comprise a plurality of openings, and for the conduction of said method each of said openings except one of them is hermetically sealed, thus said one opening remaining unsealed is for use in said measurement (e.g. a pipe having one opening sealed, or a tee connection having two openings sealed, etc.).

Said method comprises the following sequence:

a) inserting said body into a sealable chamber having an inlet line comprising an inlet valve, a first outlet line comprising a first pressure sensor and a subsequent first outlet valve, and a second outlet line comprising a second outlet valve; hermetically connecting the opening of said body with the first outlet line; inner volume of the chamber is in material connection with a second pressure sensor when sealed,

b) sealing the chamber such that any mass transfer into/out of said chamber except through said inlet line, first outlet line and second outlet line is prevented,

c) putting the chamber into thermal connection with a thermal reservoir, thus regulating the temperature of the chamber,

d) sucking out the gas content inside the body and the chamber, through said first outlet line and second outlet line, respectively, having said inlet valve closed, and said first and second outlet valves open, and repeating this step until pressure increase inside the body due to outgassing from the body material reaches a negligible or a known level, which can be determined by skilled person in the art, in accordance with measurement conditions employed,

e) feeding gas into the chamber through said inlet line in a regulated manner, while the first and second valves are closed,

f) measuring the pressures at the first pressure sensor and the second pressure sensor, recording the pressure increase in the body and subtracting the pressure increase due to the outgassing phenomena, if any, and not at a negligible level,

g) calculating the diffusion coefficient according to the Fick's law for radial diffusion in cylindrical coordinates.

Upon above step 'e', the gas diffuses into the polymer matrix of the body, and travels along wall thickness thereof. During this period, the presence of the gas cannot be sensed by the first pressure sensor. Afterwards, the amount of the gas reached into the hollow body start to rise, and after a while, the rise of the pressure values reach to a constant incline. Preferably, a graph showing the pressure values read from the first pressure sensor versus time is drawn. The time value where the tangent of pressure values versus time graph intersects the time axis represents the time lag ($t_{lag}$). Calculations for determining the gas diffusion coefficient (D) through the polymer matrix of the body (2) (e.g. side walls of a pipe) is preferably determined by using following equation (ISBN: 978-0198534112) representing Fick's Law arranged according to cylindrical coordinates:

$$D = [r_0^2 - r_i^2 + (r_0^2 + r_i^2) \cdot \ln(r_i/r_0)] / 4 \cdot t_{lag} \cdot (r_i/r_0)$$

, where $r_0$ and $r_i$ represent outer and inner radii of the hollow body (2) in cylindrical form, respectively. Assumptions to be made for using the above equation are as follows: gas concentration in the body material and in the body volume is zero; gas concentration in the chamber volume is constant throughout the measurements; and gas diffusion takes place only at radial direction (radially throughout the wall thickness of the body, from outer surface to the inner surface thereof), and gas diffusion coefficient is independent from the gas concentration

Thus, the abovementioned shortcomings of the prior art are overcome with the system and method according to the present invention. Since the measurement of gas transfer through side walls of the body is performed using only the pressure values by not taking the concentrations of any specific gaseous substance into account, the system and method according to the present invention are non-gas-specific.

**Claims**

1. A non gas specific system (1) for use in constant volume/variable pressure gas diffusion coefficient measurement of a three dimensional hollow body (2) having one opening (15), said system comprises a sealable chamber (3) having an inlet line (4), a first outlet line (5) and a second outlet line (6) when sealed,

**wherein,**

the inlet line (4) comprises an inlet valve (7) for regulated gas inlet into the chamber,

the first outlet line (5) comprises a first pressure sensor (8) and a subsequent first outlet valve (9) for, in use, sucking gas out of said body (2) using a vacuum device (10) having a vacuum sensor in interaction therewith,

the second outlet line (6) comprises a second outlet valve (11) for, in use, sucking gas out of the chamber (3) using a vacuum device (10),

the chamber (3) is in material connection with a second pressure sensor (12),

the system further comprises a data recording system (13) for, in use, recording the pressures at said first and second pressure sensors (8, 12);

and in use, the chamber (3) receives said body (2), and said first outlet line (5) is in hermetical connection (14) with the opening (15) of said body (2).

2. A system according to the Claim 1, wherein the distal ends of first and second outlet lines (5, 6) with regard to the chamber (3), are merged after the respective first and second outlet valves (9, 11), such that said gas suction through said first and second outlet lines (5, 6) can be applied using a single vacuum device (10).

3. A system according to the Claim 1, wherein the system (1) further comprises a thermal reservoir (17) for, in use, regulating the temperature of said chamber (3).

4. A system according to the Claim 1, wherein said second pressure sensor (12) is located on the second outlet line (6), between the chamber (3) and the second outlet valve (11).

5. A system according to the Claim 1, wherein said second pressure sensor (12) is located on the inlet line (4), between the chamber (3) and the inlet valve (7).

6. A system according to the Claim 1, wherein said second pressure sensor (12) is located on the chamber (3).

7. A system according to the Claim 1, wherein said body (2) is a pipe having one opening gas impermeably sealed.

8. A system according to the Claim 1, wherein said system (1) is provided with a computer for receiving and evaluating pressure data from the data recording system (13), and/or for controlling the valves (7, 9, 11).

9. A system according to the Claim 1, wherein said body is a fluid container for food and/or beverages.

10. A method for measuring the gas permeability of a three dimensional hollow body having only one opening permitting convective mass transfer therethrough, said method comprises the following sequence:

a) inserting said body into a sealable chamber having an inlet line comprising an inlet valve, a first outlet line comprising a first pressure sensor and a subsequent first outlet valve, and a second outlet line comprising a second outlet valve; hermetically connecting the opening of said body with the first outlet line; inner volume of the chamber is in material connection with a second pressure sensor when sealed,

b) sealing the chamber such that any mass transfer into/out of said chamber except through said inlet line, first outlet line and second outlet line is prevented,

c) putting the chamber into thermal connection with a thermal reservoir, thus regulating the temperature of the chamber,

d) sucking out the gas content inside the body and the chamber, through said first outlet line and second outlet line, respectively, having said inlet valve closed, and said first and second outlet valves open, and repeating this step until pressure increase inside the body due to the outgassing from the body material reaches a negligible or a known level,

e) feeding gas into the chamber through said inlet line in a regulated manner, while the first and second valves are closed

f) measuring the pressures at the first pressure sensor and the second pressure sensor, recording the pressure increase in the body and subtracting the pressure increase due to the outgassing phenomena, if any and not at a negligible level

g) calculating the diffusion coefficient according to the Fick's law for radial diffusion in cylindrical coordinates.

11. A method according to the Claim 10, wherein the gas diffusion coefficient (D) through the polymer matrix of the body (2) is calculated using the following Equation where $r_0$ and $r_i$ represent outer and inner radii of a hollow body (2) in cylindrical form, respectively, and $t_{lag}$ represents the time lag:

$$D = [r_0^2 - r_i^2 + (r_0^2 + r_i^2) \cdot \ln(r_i/r_0)] / 4 \cdot t_{lag} \cdot (r_i/r_0).$$

**Fig. 1**

**Fig. 2**

Europäisches
Patentamt

European
Patent Office

Office européen
des brevets

# EUROPEAN SEARCH REPORT

Application Number

EP 14 19 2949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 121 135 B2 (MOORE RODNEY [US]) 17 October 2006 (2006-10-17) | 1,4,5,7,9 | INV. G01N15/08 |
| Y | * column 1, lines 5-11 * <br> * column 9, lines 3-59 * <br> * figures 1,3 * | 2,3,6,8 | |
| Y | US 2004/040372 A1 (PLESTER GEORGE [BE] ET AL) 4 March 2004 (2004-03-04) | 3,8,10,11 | |
| A | * paragraph [0001] * <br> * paragraph [0075] * <br> * paragraphs [0104] - [0107] * <br> * paragraphs [0120] - [0121] * <br> * figures 5,7 * | 1 | |
| Y | SANCHEZ J ET AL: "The application of transient time-lag method for the diffusion coefficient estimation on zeolite composite membranes", SEPARATION AND PURIFICATION TECHNOLOGY, ELSEVIER SCIENCE, AMSTERDAM, NL, vol. 25, no. 1-3, 1 October 2001 (2001-10-01), pages 467-474, XP027413152, ISSN: 1383-5866 * page 467, right-hand column * * page 468, right-hand column, paragraph 2 * * page 469, right-hand column, paragraph 1-3 * * equation 9 * * figure 2 * | 10,11 | |
| Y | GB 2 437 136 A (LTD TECHNOLOX [GB]) 17 October 2007 (2007-10-17) * page 3, paragraph 4 * * figures 1,5 * | 2,6 | |

TECHNICAL FIELDS
SEARCHED (IPC)

G01N

-/--

The present search report has been drawn up for all claims

| Place of search | Date of completion of the search | Examiner |
|---|---|---|
| The Hague | 2 April 2015 | Dregely, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 14 19 2949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2004/093934 A1 (CHUN MYUNG-SUK [KR]) 20 May 2004 (2004-05-20) * paragraphs [0036] - [0045] * * figure 2 * ----- | 1-11 | |
| | | | **TECHNICAL FIELDS SEARCHED (IPC)** |

The present search report has been drawn up for all claims

| Place of search | Date of completion of the search | Examiner |
|---|---|---|
| The Hague | 2 April 2015 | Dregely, Daniel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .......................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 14 19 2949

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2015

| Patent document cited in search report | | Publication date | Patent family member(s) | | Publication date |
|---|---|---|---|---|---|
| US 7121135 | B2 | 17-10-2006 | AT | 474217 T | 15-07-2010 |
| | | | DE | 10124225 A1 | 16-01-2003 |
| | | | EP | 1393044 A1 | 03-03-2004 |
| | | | JP | 4262989 B2 | 13-05-2009 |
| | | | JP | 2004528571 A | 16-09-2004 |
| | | | US | 2004177676 A1 | 16-09-2004 |
| | | | WO | 02095369 A1 | 28-11-2002 |
| US 2004040372 | A1 | 04-03-2004 | AU | 2003257202 A1 | 19-03-2004 |
| | | | US | 2004040372 A1 | 04-03-2004 |
| | | | WO | 2004020967 A1 | 11-03-2004 |
| GB 2437136 | A | 17-10-2007 | DE | 102007014182 A1 | 06-12-2007 |
| | | | GB | 2437136 A | 17-10-2007 |
| | | | US | 2007227233 A1 | 04-10-2007 |
| US 2004093934 | A1 | 20-05-2004 | KR | 20040043566 A | 24-05-2004 |
| | | | US | 2004093934 A1 | 20-05-2004 |

EPO FORM P0459

For more details about this annex : see Official Journal of the European Patent Office, No. 12/82

## EP 3 021 103 A1

**Patent documents cited in the description**

- US 5159829 A